(19) Europäisches Patentamt
European Patent Office
Office européen des brevets

(11) **EP 3 006 812 B1**

(12) **EUROPÄISCHE PATENTSCHRIFT**

(45) Veröffentlichungstag und Bekanntmachung des Hinweises auf die Patenterteilung:
**19.02.2020   Patentblatt 2020/08**

(51) Int Cl.:
**F17C 13/12** *(2006.01)*      **F17C 13/02** *(2006.01)*

(21) Anmeldenummer: **15194927.8**

(22) Anmeldetag: **01.08.2008**

(54) **ELEKTRONISCHER DURCHFLUSSSENSOR**

ELECTRONIC FLOW SENSOR

CAPTEUR DE DÉBIT ÉLECTRONIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **01.08.2007   DE 102007035977**

(43) Veröffentlichungstag der Anmeldung:
**13.04.2016   Patentblatt 2016/15**

(62) Dokumentnummer(n) der früheren Anmeldung(en) nach Art. 76 EPÜ:
**08161617.9 / 2 020 560**

(73) Patentinhaber:
• **Toptron Elektronik GmbH & Co. KG**
  **58706 Menden (DE)**
• **Cavagna Group S.p.A.**
  **25012 Viadana die Calvisano BS (IT)**

(72) Erfinder: **Cramer, Wilhelm**
  **58706 Menden (DE)**

(74) Vertreter: **Zech, Stefan Markus**
  **Meissner Bolte Patentanwälte**
  **Rechtsanwälte Partnerschaft mbB**
  **Postfach 86 06 24**
  **81633 München (DE)**

(56) Entgegenhaltungen:
EP-A- 0 653 585      EP-A- 1 205 704
EP-A- 1 356 973      EP-A- 1 450 097
EP-A2- 0 328 031     DE-A1- 10 244 139
DE-A1- 19 643 801    DE-A1-102005 040 024
JP-A- 59 187 178     JP-A- 2006 266 384
JP-A- 2006 283 840   US-A- 5 360 139
US-B2- 7 077 741

• **SCHMIDT G: "GRUNDLAGEN DER REGELUNGSTECHNIK", GRUNDLAGEN DER REGELUNGSTECHNIK, SPRINGER VERLAG, BERLIN, DE, 1982, XP002197937,**

EP 3 006 812 B1

**Beschreibung**

Die Erfindung betrifft eine Sicherheitsabsperreinrichtung für eine Flüssiggasanlage mit einem oder mehreren Gasverbrauchern für Fahrzeuge und/oder Fahrzeuganhänger zur Vermeidung einer ungewollten Freisetzung von Gas. Eine derartige Anordnung ist bereits aus der DE 10 2005 040 024 A1 bekannt. Bei der dort beschriebenen Sicherheitsabsperreinrichtung wird eine Gaszufuhr im Falle eines Unfalls unterbrochen. Hierfür ist dort ein Unfallsensor, der beispielsweise als Beschleunigungs- und/oder Neigungssensor ausgebildet sein kann, vorgesehen. EP0328031A2 offenbart eine Sicherheitsabsperreinrichtung für eine Flüssiggasanlage.

Gegenüber diesem Stand der Technik besteht die Aufgabe der vorliegenden Erfindung darin, eine Sicherheitsabsperreinrichtung zu schaffen, die bei Unfällen, aber auch in anderen Störungssituationen eine Gaszufuhr zuverlässig absperrt.

Diese Aufgabe wird mit einer Sicherheitsabsperreinrichtung nach den Merkmalen des Patentanspruches 1 gelöst.

Vorteilhafte Weiterbildungen sind in den Unteransprüchen angegeben.

Weiterhin wird eine Flüssiggas-Anlage, bei der eine Sicherheitsabsperreinrichtung nach der vorliegenden Erfindung integriert ist sowie ein Verfahren zur Sicherheitsabsperrung einer Flüssiggas-Anlage vorgeschlagen.

Ein Kerngedanke der vorliegenden Erfindung besteht darin, dass ein Durchflusssensor zur Ermittlung eines aktuellen Gasflusses, der aus einem Gasvorratsbehälter abströmt, vorgesehen ist und dass eine Auswerteinheit diesen aktuellen Gasfluss anhand bestimmter Kriterien der vorgegebenen Flüssiggas-Anlage auf Plausibilität überprüft. Dabei wird als Kriterium zur Beurteilung der Plausibilität bzw. Unbedenklichkeit eines aktuellen Gasflusses ein zulässiger Maximalgasfluss herangezogen. Die Auswerteinheit vergleicht den aktuellen Gasfluss mit einem zulässigen Maximalgasfluss $F_{max}$.

Eine Abtastfrequenz zur Ermittlung des aktuellen Gasflusses $F_a$ kann beispielsweise im Bereich von 10 bis 200 mal pro Minute liegen. Bevorzugtermaßen kann eine solche Abtastfrequenz im Bereich von 30 bis 120 mal pro Minute liegen, so dass der zeitliche Abstand zwischen einer Bestimmung des aktuellen Gasflusses und eines vorherigen Gasflusses zwischen 0,5 s und 5 s beträgt. Wird auch ein Vergleich $F_a - F_v > \Delta_{max}$ vorgenommen, kommt es einerseits darauf an, dass die beispielsweise durch einen Leitungsbruch hervorgerufene Flussänderung, selbst wenn der Leitungsbruch an einem entfernten Abschnitt der Gasleitung auftritt, auch eingetreten ist, so dass die zeitlichen Abstände der Erfassung bzw. Berücksichtigung nicht zu klein gewählt werden dürfen; auf der anderen Seite muss ein zu langes Intervall jedoch auch vermieden werden, um möglichst rasch die Gaszufuhr absperren zu können und einen unnötigen Gasaustritt zu verhindern und um eine unbeabsichtigte Abschaltung beim Inbetriebnehmen von verschiedenen Gasgeräten innerhalb einer kurzen Zeit zu vermeiden.

Schließlich ist eine Elektronikeinheit vorgesehen, die das elektromagnetische Gasventil zur Absperrung der Gaszufuhr ansteuert, wenn die Auswerteinheit einen im Rahmen des Überprüfungskriteriums unzulässigen Gasdurchfluss festgestellt hat, also der aktuelle Gasfluss $F_a$ über dem zulässigen Maximalgasfluss $F_{max}$ liegt.

Der zulässige Maximalgasfluss $F_{max}$ ist vorzugsweise an der Summe aller Verbrauchswerte $F_s$ der Gasverbraucher der Flüssiggas-Anlage bemessen bzw. orientiert.

Weiter vorzugsweise ist zur Vermeidung ungewollter Absperrungen eine Toleranz vorgesehen, so dass der zulässige Maximalgasfluss $F_{max}$ beispielsweise um einen Toleranzwert von weniger als 25%, vorzugsweise von weniger als 15% über der Summe aller Verbraucher $F_s$ der Gasverbraucher der Flüssiggas-Anlage liegt.

Alternativ ist es auch möglich, dass der zulässige Maximalgasfluss $F_{max}$ durch von den Verbrauchern gemeldete aktuelle Verbrauchswerte und/oder zu erwartende Gasverbrauchswerte aktuell verändert bzw. angepasst werden. Diese Informationen können an die Auswerteinheit und/oder die Elektronikeinheit geliefert werden, um so zu bestimmen, ob ein plausibler bzw. unplausibler Gasverbrauch vorliegt. Eine Absperrung kann dann vorgenommen werden, wenn der aus den Informationen der Gasverbraucher zu erwartende Gasverbrauch nicht mit dem am Durchflusssensor gemessenen Gasverbrauch übereinstimmt. Selbstverständlich können auch hier zweckentsprechend Toleranzen vorgesehen werden. Die Informationen über aktuelle Verbrauchswerte bzw. zu erwartende Gasverbrauchswerte der jeweiligen Gasverbraucher können insbesondere über ein Bus-System an die Elektronikeinheit bzw. die Auswerteinheit weitergegeben werden.

In einer bevorzugten Weiterbildung kann die Auswerteinheit mit einer Informations-ausgabeeinheit, wie beispielsweise einer Anzeige, insbesondere einem Bildschirm/Display, oder einer Schnittstelle in Verbindung stehen, um eine oder mehrere der folgenden Informationen auszugeben: aktueller Gasfluss, über einen Zeitraum integrierter Gasfluss, insbesondere seit Flaschenwechsel integrierter Gasfluss, aktuell verfügbare Restmenge in einer Gasfalsche bzw. einem Gasvorratsbehälter sowie Warnhinweis bei Unterschreiten einer vorbestimmten Restmenge.

In einer möglichen Ausgestaltung der vorliegenden Erfindung ist weiterhin ein Unfallsensor zur Ermittlung eines Unfalls des Fahrzeugs und/oder Fahrzeuganhängers vorgesehen, der mit der Auswerteinheit und/oder der Elektronikeinheit in Wirkverbindung steht, wobei die Elektronikeinheit im Falle einer Unfallmeldung vom Unfallsensor das elektromagnetische Gasventil zur Absperrung der Gaszufuhr ansteuert. Insofern kann die aus dem Stand der Technik bereits bekannte Sicherheitsabsperreinrichtung mit der hier vorliegenden Sicherheitsabsperreinrichtung etwa in dieser Weise kombiniert werden, dass sowohl bei Ansprechen des Unfallsensors, als auch bei Ermittlung eines mit den Kriterien der speziellen Flüssiggas-Anlage nicht plausiblen Gasdurchflusses die Gaszufuhr abgesperrt wird. In dieser Ausgestaltung wird also für den Fall eines Leitungsbruches in Folge eines Unfalls eine doppelte Sicherheit gewährleistet, da in diesem Fall sowohl der Unfallsensor eine Absperrung der Gaszufuhr bewirken, als auch der Gasdurchfluss einen unplausiblen Wert annehmen würde, so dass auch aufgrund der Durchflussauswertung eine sofortige Absperrung der Gaszufuhr erfolgen würde.

In einer bevorzugten Ausgestaltung ist das elektromagnetische Gasventil derart aufgebaut, dass es bei fehlender Energieversorgung schließt, also die Gaszufuhr in der Flüssiggas-Anlage absperrt.

Das elektromagnetische Gasventil kann entweder strömungstechnisch einem Druckregler nach- oder vorgeschaltet sein. Das elektromagnetische Gasventil kann auch direkt am Druckregler oder am Gasvorratsbehälter angebracht sein.

Das elektromagnetische Gasventil und/oder die Auswerteinheit und/oder die Elektronikeinheit können an einer in das Fahrzeug und/oder den Fahrzeuganhänger eingebaute Batterie angeschlossen oder anschließbar sein.

In einer weiteren Ausgestaltung kann ein vorzugsweise im Inneren des Fahrzeuges oder des Fahrzeuganhängers angeordneter Schalter zur manuellen Ein- und Abschaltung der Gasversorgung vorgesehen sein.

Die Sicherheitsabsperreinrichtung nach der vorliegenden Erfindung kann allgemein zusätzlich ein oder mehrere weitere Sensoren umfassen, insbesondere Gassensoren und/oder Rauchmelder, die weitere Gefahrensituationen ermitteln, insbesondere Gasaustritt und/oder Brand im Fahrzeug und/oder Fahrzeuganhänger, wobei die Sensoren zur Weitergabe einer Gefahrmeldung mit der Elektronikeinheit verbunden sind.

Hierbei sind die Elektronikeinheit und/oder die Sensoren bevorzugtermaßen so ausgelegt, dass im Fehlerfall das elektromagnetische Gasventil die Gaszufuhr automatisch absperrt.

Weiter wird nach der vorliegenden Erfindung auch eine Flüssiggasanlage für Fahrzeuge und/oder Fahrzeuganhänger vorgeschlagen, bei der ein oder mehrere Gasvorratsbehälter über eine oder mehrere Gasleitungen mit einem oder mehreren Gasverbrauchern verbunden oder verbindbar sind, mit einer Sicherheitsabsperreinrichtung zur Vermeidung einer ungewollten Freisetzung von Gas, wobei die Sicherheitsabsperreinrichtung umfasst: ein elektromagnetisches Gasventil zur Gaszufuhr-Absperrung, eine Elektronikeinheit zur Ansteuerung des elektromagnetischen Gasventils, einen Durchflusssensor zur Ermittlung eines aktuellen Gasflusses $F_a$, der aus einem Gasvorratsbehälter abströmt, eine Auswerteinheit zum Vergleich des aktuellen Gasflusses mit einem zulässigen Maximalgasfluss $F_{max}$ und eine Elektronikeinheit, die das elektromagnetische Gasventil zur Absperrung der Gaszufuhr ansteuert, wenn die Auswerteinheit einen aktuellen Gasfluss $F_a$ ermittelt hat, der über dem zulässigen Maximalgasfluss $F_{max}$ liegt.

Weiter wird auch ein entsprechendes Verfahren zur Sicherheitsabsperrung einer Flüssigkeits-Anlage mit den Merkmalen des Anspruches 17 vorgeschlagen, wobei ein aktueller Gasfluss $F_a$, der aus einer Gasquelle abströmt, ermittelt wird, der aktuelle Gasfluss $F_a$ mit einem maximal zulässigen Gasfluss $F_{max}$ verglichen wird und dann, wenn der aktuelle Gasfluss $F_a$ über dem zulässigen Maximalgasfluss $F_{max}$ liegt, die Gaszufuhr über ein elektromagnetisch angesteuertes Gasventil unterbrochen wird.

Weiter besteht eine vorzugsweise Ausgestaltung des Verfahrens darin, dass zur Absperrung der Gaszufuhr in der Flüssiggas-Anlage die Stromzufuhr zum elektromagnetischen Gasventil unterbrochen wird.

Das Verfahren können in einer ersten Alternative derartig ausgestaltet sein, dass der zulässige Maximalgasfluss $F_{max}$ für eine vorgegebene Konfiguration der Flüssiggas-Anlage fix vorgegeben bzw. vorausgewählt werden. In einer erfindungsgemässen Ausgestaltung ist es möglich, dass der zulässige Maximalgasfluss $F_{max}$ an die jeweilige Verbrauchssituation angepasst wird, das heißt der zulässige Maximalgasfluss $F_{max}$ anhand aktueller Gasverbräuche der Gasverbraucher bzw. zu erwartender Gasverbräuche der Gasverbraucher aktuell bestimmt wird. In einer konkreten Ausgestaltung kann die Elektronikeinheit beispielsweise von jedem Gasverbraucher die Information, dass er ein-oder ausgeschaltet ist sowie ggf. auch die zu erwartende Gasverbrauchsmenge, erhalten. Die Übermittlung dieser Information kann über separate Leitungen zu jedem Verbraucher bzw. über ein Bus-System erfolgen.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:

Fig. 1    ein schematisches Prinzip-Schaubild einer Ausführungsform der erfindungsgemäßen Sicherheitsabsperreinrichtung bzw. der erfindungsgemäßen Flüssiggas-Anlage

Fig. 2    ein Verlaufsdiagramm des aktuellen Gasfluss über einen bestimmten Zeitraum

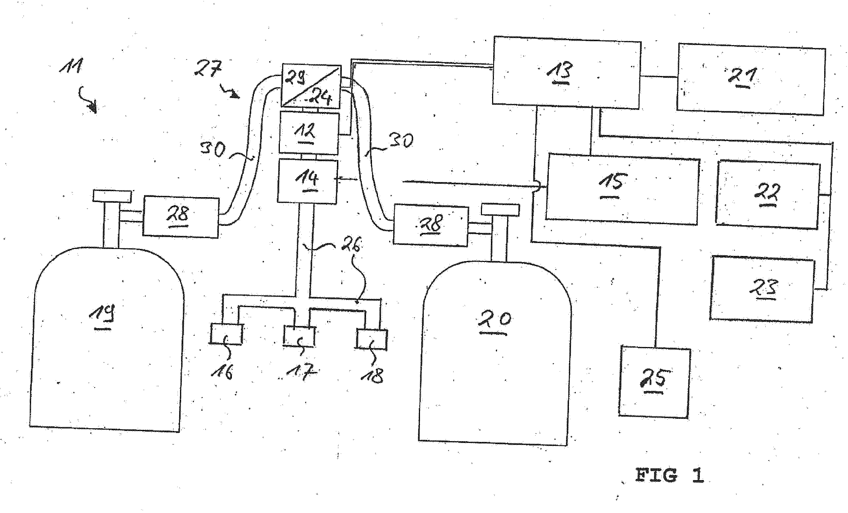

In Figur 1 ist ein Prinzipaufbau einer Flüssiggas-Anlage mit einer Ausführungsform einer erfindungsgemäßen Sicherheitsabsperreinrichtung 27 veranschaulicht. Die Flüssiggas-Anlage 11 umfasst zunächst zwei Gasvorratsbehälter 19, 20, die über Zuleitungen 30 an einen Umschalter 29 angeschlossen sind, in den gleichzeitig ein Druckregler 24 integriert ist. In den Zuleitungen 30 kann jeweils noch eine Schlauchbruchsicherung 28 angeordnet sein. Der Umschalter 29 arbeitet wie folgt: Wenn zwei volle Gasvorratsbehälter 19, 20 angeschlossen sind, wird der Umschalter 29 so eingestellt, dass aus dem vorgewählten Gasvorratsbehälter das Gas entnommen wird. Wenn dieser Gasvorratsbehälter leer wird, schaltet dieser Umschalter 29 automatisch auf den zweiten vollen Gasvorratsbehälter um.

Der Umschalter 29 schaltet in der vorliegenden Ausführungsform automatisch von dem leeren Vorratsbehälter auf den vollen um (und kann auch über eine noch zu erwähnende Elektronikeinheit 13 ansteuerbar sein), so dass wahlweise entweder dem Gasvorratsbehälter 19 oder dem Gasvorratsbehälter 20 Gas entnommen werden kann. In den meisten Anwendungsfällen dürfte es sinnvoll sein, zunächst einen ersten Gasvorratsbehälter zu entleeren und dann auf den zweiten Gasvorratsbehälter umzuschalten.

Welcher Gasvorratsbehälter momentan ausgewählt ist, kann auch über eine Informations-Ausgabeeinheit 21, beispielsweise einen Bildschirm ausgegeben werden.

Über Gasleitungen 26 wird das Gas vom Umschalter 29 bzw. Druckregler 24 an eine Mehrzahl von Gasverbrauchern 16 bis 18 geführt. Unmittelbar an den Umschalter 29 anschließend ist dabei ein elektromagnetisches Gasventil 12 sowie daran anschließend ein Durchflusssensor 14 vorgesehen. Das elektromagnetische Gasventil ist ausgebildet, um einen Gasstrom an die Gasverbraucher 16 bis 18 zu unterbrechen, wobei dies bevorzugtermaßen dadurch erfolgt, dass eine Stromversorgung des elektromagnetischen Gasventils 12 unterbrochen wird. Insofern bleibt das elektromagnetische Gasventil 12 in Offenstellung, solange ein vorgegebenes elektrisches Potential an ihm anliegt. Sinkt dieses elektrische Potential ab oder ist dieses Potential 0, schließt das elektromagnetische Gasventil und unterbricht die Gaszufuhr an die Mehrzahl der Gasverbraucher 16 bis 18.

Der Durchflusssensor 14 ist in der Lage, einen aktuellen Gasfluss $F_a$ an die Gasverbraucher 16 bis 18 zu detektieren. Der aktuelle Gasfluss $F_a$ wird hierbei an eine Auswerteinheit 15 übermittelt. Die Auswerteinheit 15 vergleicht den aktuellen Gasfluss $F_a$ in dieser Ausführungsform sowohl mit einem zulässigen Maximalgasfluss $F_{max}$, der sich aus der Summe aller Verbrauchswerte $F_s$ der Gasverbraucher 16 bis 18 der Flüssiggas-Anlage bemisst, als auch mit einem vorherigen Gasfluss $F_v$. Hierzu wird der jeweils ausgelesene aktuelle Gasfluss $F_a$ in der Auswerteinheit gespeichert, so dass er im nächsten Abfragezyklus als vorheriger Gasfluss $F_v$ zur Verfügung steht. Bei der vorliegenden Ausführungsform wird der aktuelle Gasfluss $F_a$ also gleichzeitig zwei Plausibilitätsproben unterzogen, nämlich einerseits daraufhin, ob er über dem insgesamt zulässigen Maximalgasfluss $F_{max}$ liegt und weiter daraufhin, ob im Vergleich mit einem vorherigen Gasfluss $F_v$ eine maximal zulässige Änderungsrate $\Delta_{max}$ überschritten ist. Liegt einer der beiden Fälle vor, das heißt ermittelt die Auswerteinheit einen unter den Kriterien der Flüssiggas-Anlage 11 nicht plausibel erscheinenden aktuellen Gasfluss $F_a$, so wird ein Schließ- bzw. Fehlersignal an eine Elektronikeinheit 13 übermittelt, die das elektromagnetische Gasventil 12 in Schließposition bringt. Konkret würde im vorliegenden Fall die Elektronikeinheit 13 die Stromzufuhr für das elektromagnetische Gasventil 12 unterbrechen, so dass dieses automatisch schließt. Die Elektronikeinheit 12 bzw. die Auswerteinheit 15 stehen bevorzugtermaßen ebenfalls mit der Informations-Ausgabeeinheit 21 derart in Wirkverbindung, dass sich die durch die Auswerteinheit 15 ermittelten Daten ggf. aufbereitet ausgeben lassen und die momentanen Zustände der Flüssiggas-Anlage angezeigt werden, etwa der aktuelle Gasfluss $F_a$, ein vorheriger Gasfluss $F_v$, die festgelegten Anlagenparameter $\Delta_{max}$ sowie $F_{max}$, der Verbrauchswert des größten Gasverbrauchers $F_G$, die Summe aller Verbrauchswerte der Gasverbraucher der Flüssiggas-Anlage $F_s$, einen seit letztem Flaschenwechsel erfolgten Gasverbrauch, eine Restmenge von Gas im jeweils aktuellen Gasvorratsbehälter sowie weitere Informationen bzw. beliebige Unterkombinationen hiervon.

Die hier nur beispielhaft dargelegte Sicherheitsabsperreinrichtung 27 umfasst als fakultative Ausgestaltung bzw. zur weiteren Erhöhung der Sicherheit noch zwei Unfallsensoren, nämlich einen Beschleunigungssensor 22 sowie einen Neigungssensor 23, so dass bei Ansprechen wenigstens eines der beiden Sensoren auf einen Unfall geschlossen wird und diese Information in der Elektronikeinheit 13 ebenfalls ein Schließen des elektromagnetischen Gasventils 12 durch Unterbrechen der Stromzufuhr bewirkt.

Schließlich kann noch ein manueller Schalter 25, beispielsweise im Innenraum eines Fahrzeugs oder Fahrzeuganhängers vorgesehen sein, der ebenfalls ein Schließen des elektromagnetischen Gasventils beispielsweise dadurch bewirkt, dass die Elektronikeinheit 13 die Stromzufuhr zum elektromagnetischen Gasventil 12 unterbricht. Der bereits erwähnte Umschalter 29 kann auch an die Elektronikeinheit 13 angeschlossen sein, so dass die Elektronikeinheit 13 vom Umschalter 29 ein Signal erhält, dass umgeschaltet wurde und eine entsprechende Anzeige bzw. Auswertung erfolgen kann.

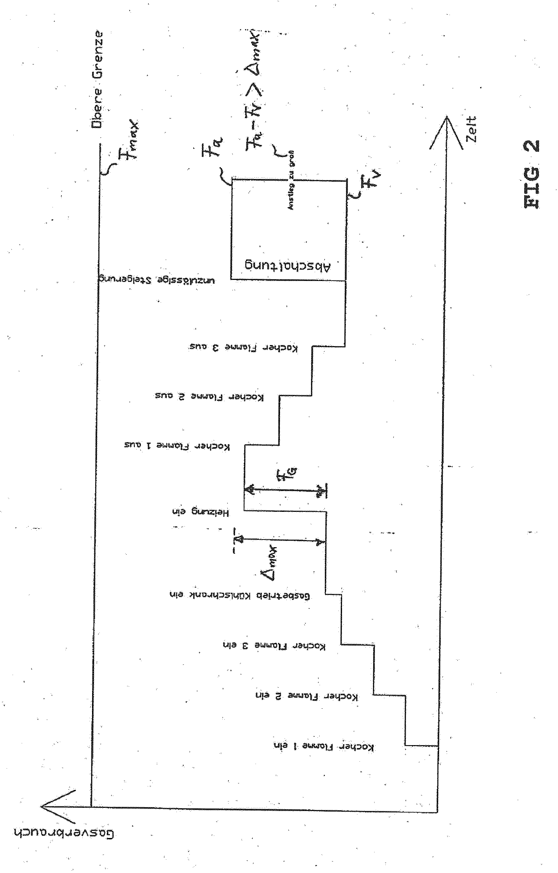

In Figur 2 ist noch rein zu Veranschaulichungszwecken ein möglicher Gasverbrauch über die Zeit dargestellt, wobei als letztes Ereignis eine Erhöhung des aktuellen Gasflusses $F_a$ gegenüber einem vorherigen Gasfluss $F_v$ erfolgt ist, die über einer maximal zulässigen Änderungsrate $\Delta_{max}$ liegt, so dass hierdurch über die Auswerteinheit 15 und die Elektronikeinheit 13 eine Absperrung des elektromagnetischen Gasventils 12 bewirkt wird.

Die Sicherheitsabsperreinrichtung 27 sperrt damit die Gaszufuhr ab, wenn

$$F_a - F_v > \Delta_{max} \text{ (erste Alternative eines unplausiblen Gasverbrauchs)}$$

oder

$$F_a > F_{max} \text{ (zweite Alternative eines unplausiblen Gasverbrauchs).}$$

Nach der Erfindung wird nur die letztgenannte Alternative als Plausibilitätsprüfung durchgeführt werden. Bevorzugtermaßen werden beide Plausibilitätsprüfungen durchgeführt und eine Abschaltung bereits dann bewirkt, wenn nur eine Plausibilitätsprüfung einen unplausiblen Gasverbrauch ergibt.

**Bezugszeichenliste**

| | |
|---|---|
| 11 | Flüssiggas-Anlage |
| 12 | elektromagnetisches Gasventil |
| 13 | Elektronikeinheit |
| 14 | Durchflusssensor |
| 15 | Auswerteinheit |
| 16 bis 18 | Gasverbraucher |
| 19, 20 | Gasvorratsbehälter |
| 21 | Informations-Ausgabeeinheit |
| 22 | Unfallsensor, Beschleunigungssensor |
| 23 | Unfallsensor, Neigungssensor |
| 24 | Druckregler |
| 25 | Schalter |
| 26 | Gasleitungen |
| 27 | Sicherheitsabsperreinrichtung |
| 28 | Schlauchbruchsicherung |
| 29 | Umschalter |
| 30 | Zuleitung |
| $F_a$ | aktueller Gasfluss |
| $F_v$ | vorheriger Gasfluss |
| $\Delta_{max}$ | maximal zulässige Änderungsrate |
| $F_{max}$ | zulässiger Maximalgasfluss |
| $F_G$ | Verbrauchswert des größten Gasverbrauches |
| $F_S$ | Summe aller Verbrauchswerte der Gasverbraucher der Flüssiggas-Anlage |

**Patentansprüche**

1.  Sicherheitsabsperreinrichtung (27) für eine Flüssiggas-Anlage (11) mit einem oder mehreren Gasverbrauchern (16 bis 18) für Fahrzeuge und/oder Fahrzeuganhänger zur Vermeidung einer ungewollten Freisetzung von Gas, umfassend

    a) ein elektromagnetisches Gasventil (12) zur Gaszufuhr-Absperrung,
    b) einen Durchflusssensor (14) zur Ermittlung eines aktuellen Gasflusses $F_a$, der aus einem Gasvorratsbehälter (19, 20) abströmt,
    c) eine Auswerteinheit (15) zum Vergleich des aktuellen Gasflusses mit einem zulässigen Maximalgasfluss $F_{max}$,
    d) eine Elektronikeinheit (13) zur Ansteuerung des elektromagnetischen Gasventils (12), die das elektromagnetische Gasventil (12) zur Absperrung der Gaszufuhr ansteuert, wenn die Auswerteinheit einen aktuellen Gasfluss $F_a$ ermittelt hat, der über dem zulässigen Maximalgasfluss $F_{max}$ liegt,
    wobei der maximal zulässige Maximalgasfluss $F_{max}$ jeweils aktuell anhand von aktueller Verbrauchsinformationen der Gasverbraucher (16 bis 18), wobei die Verbrauchsinformationen von der Elektronikeinheit erhalten werden, festgelegt wird.

2.  Sicherheitsabsperreinrichtung nach Anspruch 1, **dadurch gekennzeichnet,**
    **dass** der zulässige Maximalgasfluss $F_{max}$ bemessen ist an der Summe aller Verbrauchswerte $F_S$ der Gasverbraucher

(16 bis 18) der Flüssiggas-Anlage (11).

3. Sicherheitsabsperreinrichtung nach Anspruch 2,
**dadurch gekennzeichnet,**
**dass** der zulässige Maximalgasfluss F$_{max}$ um einen Toleranzwert von weniger als 25 %, vorzugsweise von weniger als 15 % über der Summe aller Verbrauchswerte F$_s$ der Gasverbraucher (16 bis 18) der Flüssiggas-Anlage (11) liegt.

4. Sicherheitsabsperreinrichtung nach Anspruch 1,
**dadurch gekennzeichnet,**
**dass** die Gasverbraucher (16 bis 18) Informationen darüber, ob sie ein- oder ausgeschaltet sind, und/oder über den zu erwartenden Gasverbrauch an die Elektronikeinheit (13) und/oder die Auswerteinheit (15), beispielsweise über ein Bus-System, übermitteln.

5. Sicherheitsabsperreinrichtung nach einem der Ansprüche 1 bis 4,
**dadurch gekennzeichnet,**
**dass** die Auswerteinheit (15) mit einer Informations-Ausgabeeinheit (21) in Wirkverbindung steht, um eine oder mehrere der folgenden Informationen auszugeben:

 - aktueller Gasfluss
 - über einen Zeitraum integrierter Gasfluss, insbesondere seit Flaschenwechsel integrierter Gasfluss
 - aktuell verfügbare Restmenge in einer Gasflasche bzw. einem Gasvorratsbehälter
 - Warnhinweis bei Unterschreiten einer vorbestimmten Restmenge.

6. Sicherheitsabsperreinrichtung nach einem der Ansprüche 1 bis 5,
**dadurch gekennzeichnet,**
**dass** weiterhin ein Unfallsensor (22, 23) zur Ermittlung eines Unfalls des Fahrzeugs und/oder Fahrzeuganhängers vorgesehen ist, der mit der Auswerteinheit (15) und/oder der Elektronikeinheit (13) in Wirkverbindung steht, wobei die Elektronikeinheit (13) im Falle einer Unfallmeldung vom Unfallsensor (22, 23) das elektromagnetische Gasventil (12) zur Absperrung der Gaszufuhr ansteuert.

7. Sicherheitsabsperreinrichtung nach einem der Ansprüche 1 bis 6,
**dadurch gekennzeichnet,**
**dass** das elektromagnetische Gasventil (12) bei fehlender elektrischer Energieversorgung die Gaszufuhr in der Flüssiggas-Anlage (11) absperrt.

8. Sicherheitsabsperreinrichtung nach einem der Ansprüche 1 bis 7,
**dadurch gekennzeichnet,**
**dass** das elektromagnetische Gasventil (12) gasströmungstechnisch einem Druckregler (24) nachgeschaltet und insbesondere direkt am Druckregler (24) angebracht ist.

9. Sicherheitsabsperreinrichtung nach Anspruch 8,
**dadurch gekennzeichnet,**
**dass** der Druckregler (24) direkt an einem Gasvorratsbehälter (19, 20) angebracht oder anbringbar ist.

10. Sicherheitsabsperreinrichtung nach einem der Ansprüche 1 bis 7,
**dadurch gekennzeichnet,**
**dass** das elektromagnetische Gasventil (12) gasströmungstechnisch einem Druckregler (24) vorgeschaltet und insbesondere direkt an einem Gasvorratsbehälter (19, 20) angebracht oder anbringbar oder direkt am Druckregler (24) angebracht ist.

11. Sicherheitsabsperreinrichtung nach einem der Ansprüche 6, sowie 7 bis 10 sowie sich diese auf Anspruch 6 beziehen,
**dadurch gekennzeichnet,**
**dass** der Unfallsensor ein Beschleunigungssensor (22) und/oder ein Neigungssensor (23) ist.

12. Sicherheitsabsperreinrichtung nach einem der vorhergehenden Ansprüche,
**dadurch gekennzeichnet,**
**dass** ein Schalter (25), der vorzugsweise im Inneren eines Fahrzeugs oder Fahrzeuganhängers angeordnet ist, zum manuellen Abschalten der Gasversorgung vorgesehen ist.

**13.** Sicherheitsabsperreinrichtung nach einem der vorhergehenden Ansprüche,
**dadurch gekennzeichnet,**
**dass** zusätzlich ein oder mehrere weitere Sensoren vorgesehen sind, insbesondere Gassensoren und/oder Rauchmelder, die weitere Gefahrensituationen ermitteln, insbesondere Gasaustritt und/oder Brand in einem Fahrzeug und/oder Fahrzeuganhänger, wobei die Sensoren zur Weitergabe einer Gefahrmeldung mit der Elektronikeinheit (13) verbunden sind.

**14.** Sicherheitsabsperreinrichtung nach einem der vorhergehenden Ansprüche,
**dadurch gekennzeichnet,**
**dass** Elektronikeinheit (13) und/oder Sensoren (22, 23) so ausgelegt sind, dass im Fehlerfall automatisch das elektromagnetische Gasventil (12) die Gaszufuhr absperrt.

**15.** Flüssiggas-Anlage (11) für Fahrzeuge und/oder Fahrzeuganhänger,

a) bei der ein oder mehrere Gasvorratsbehälter (19, 20) über eine oder mehrere Gasleitungen (26) mit einem oder mehreren Gasverbrauchern (16 - 18) verbunden oder verbindbar sind,
b) mit einer Sicherheitsabsperreinrichtung (27) zur Vermeidung einer ungewollten Freisetzung von Gas, nach einem der vorhergehenden Ansprüche.

**16.** Verfahren zur Sicherheitsabsperrung einer Flüssiggas-Anlage (11) für Fahrzeuge und/oder Fahrzeuganhänger, nach Anspruch 15, zur Vermeidung einer ungewollten Freisetzung von Gas im Falle eines Unfalles des Fahrzeugs und/oder Fahrzeuganhängers,

a) ein aktueller Gasfluss $F_a$, der aus einer Gasquelle abströmt, ermittelt wird,
b) der aktuelle Gasfluss $F_a$ mit einem zulässigen Maximalgasfluss $F_{max}$ verglichen wird, wobei der maximal zulässige Maximalgasfluss $F_{max}$ jeweils aktuell anhand von aktueller Verbrauchsinformationen der Gasverbraucher (16 bis 18), wobei die Verbrauchsinformationen von der Elektronikeinheit erhalten werden, festgelegt wird, und
c) dann, wenn der aktuelle Gasfluss größer als der zulässige Maximalgasfluss $F_{max}$ ist, die Gaszufuhr über ein elektromagnetisch angesteuertes Gasventil (12) unterbrochen wird.

**17.** Verfahren nach Anspruch 16,
**dadurch gekennzeichnet,**
**dass** zur Absperrung der Gaszufuhr in der Flüssiggas-Anlage die Stromzufuhr zum elektromagnetischen Gasventil unterbrochen wird.

**18.** Verfahren nach einem der Ansprüche 16 oder 17,
**dadurch gekennzeichnet,**
**dass** der zulässige Maximalgasfluss $F_{max}$ für eine jeweilig gegebene Konfiguration der Flüssiggas-Anlage (11) im Laufe des Betriebs der Flüssiggas-Anlage (11) an zu erwartende Verbrauchssituationen angepasst wird.

**Claims**

**1.** A safety shut-off device (27) for a liquid gas system (11) having one or more gas consumers (16 to 18) for vehicles and/or vehicle trailers for avoiding an unwanted release of gas, comprising

a) an electromagnetic gas valve (12) for shutting off the gas supply,
b) an flow sensor (14) for detecting a current gas flow $F_a$ being discharged from a gas reservoir (19, 20),
c) an evaluation unit (15) for comparing the current gas flow $F_a$ to an admissible maximum gas flow $F_{max}$,
d) an electronic unit (13) for controlling the electromagnetic gas valve (12), which controls the electromagnetic gas valve (12) for shutting off the gas supply when the evaluation unit has detected a current gas flow $F_a$ which is above the admissible maximum gas flow $F_{max}$, wherein the maximum admissible maximum gas flow $F_{max}$ is in each case currently defined on the basis of current consumption information of the gas consumers (16 to 18), wherein the consumption information is obtained from the electronic unit.

**2.** The safety shut-off device according to claim 1,
**characterized in that**

the admissible maximum gas flow $F_{max}$ is calculated according to the sum of all of the consumption values $F_s$ of the gas consumers (16 to 18) of the liquid gas system (11).

3. The safety shut-off device according to claim 2,
   **characterized in that**
   the admissible maximum gas flow $F_{max}$ is higher than the sum of all of the consumption values $F_s$ of the gas consumers (16 to 18) of the liquid gas system (11) by a tolerance value of less than 25 %, preferably less than 15 %.

4. The safety shut-off device according to claim 1,
   **characterized in that**
   the gas consumers (16 to 18) transmit information on whether they are switched on or off and/or their expected gas consumption to the electronic unit (13) and/or the evaluation unit (15), for example via a bus system.

5. The safety shut-off device according to any one of claims 1 to 4,
   **characterized in that**
   the evaluation unit (15) is in operative communication with an information output unit (21) for outputting one or more of the following items of information:

   - current gas flow
   - gas flow integrated over a period of time, in particular the integrated gas flow since a change of bottles
   - currently available residual amount in a gas bottle or a gas reservoir
   - warning indication upon falling below a predefined residual amount.

6. The safety shut-off device according to any one of claims 1 to 5,
   **characterized in that**
   an accident sensor (22, 23) which is in operative communication with the evaluation unit (15) and/or the electronic unit (13) is moreover provided for detecting an accident befalling the vehicle and/or vehicle trailer, wherein the electronic unit (13) controls the electromagnetic gas valve (12) for shutting off the gas supply when notified by the accident sensor (22, 23) of an accident.

7. The safety shut-off device according to any one of claims 1 to 6,
   **characterized in that**
   the electromagnetic gas valve (12) shuts off the gas supply in the liquid gas system (11) in the absence of an electrical energy supply.

8. The safety shut-off device according to any one of claims 1 to 7,
   **characterized in that**
   the electromagnetic gas valve (12) is gas-fluidically connected downstream of a pressure regulator (24) and in particular directly mounted to the pressure regulator (24).

9. The safety shut-off device according to claim 8,
   **characterized in that**
   the pressure regulator (24) is directly mounted or mountable to a gas reservoir (19, 20).

10. The safety shut-off device according to any one of claims 1 to 7,
    **characterized in that**
    the electromagnetic gas valve (12) is gas-fluidically connected upstream of a pressure regulator (24) and in particular directly mounted or mountable to a gas reservoir (19, 20) or is directly mounted to the pressure regulator (24).

11. The safety shut-off device according to any one of claims 6 and 7 to 10 as far as related to claim 6,
    **characterized in that**
    the accident sensor is an acceleration sensor (22) and/or an inclination sensor (23).

12. The safety shut-off device according to any one of the preceding claims,
    **characterized in that**
    a switch (25) preferably arranged in the interior of the vehicle or vehicle trailer is provided for manually switching off the gas supply.

**13.** The safety shut-off device according to any one of the preceding claims,
**characterized in that**
one or more sensors, in particular gas sensors and/or smoke detectors, are additionally provided which detect further hazardous situations, in particular gas leakage and/or fire in the vehicle and/or vehicle trailer, wherein the sensors are in communication with the electronic unit (13) for transmitting a danger notification.

**14.** The safety shut-off device according to any one of the preceding claims,
**characterized in that**
the electronic unit (13) and/or sensors (22, 23) are configured such that the electromagnetic gas valve (12) automatically shuts off the gas supply in case of failure.

**15.** A liquid gas system (11) for vehicles and/or vehicle trailers

a) in which one or more gas reservoirs (19, 20) are connected or connectable to one or more gas consumers (16 to 18) via one or more gas lines (26),
b) comprising a safety shut-off device (27) according to any one of the preceding claims for avoiding an unwanted release of gas.

**16.** A method for a safety shut-off of a liquid gas system (11) according to claim 15 for vehicles and/or vehicle trailers, for avoiding an unwanted release of gas in case of an accident of the vehicle and/or vehicle trailer,

a) a current gas flow $F_a$ being discharged from a gas source is detected,
b) the current gas flow $F_a$ is compared to an admissible maximum gas flow $F_{max}$, wherein the maximum admissible maximum gas flow $F_{max}$ is in each case currently defined on the basis of current consumption information of the gas consumers (16 to 18), wherein the consumption information is obtained from the electronic unit, and
c) when the current gas flow is higher than the admissible maximum gas flow $F_{max}$, the gas supply is interrupted via an electromagnetically controlled gas valve (12).

**17.** The method according to claim 16,
**characterized in that**
the power supply to the electromagnetic gas valve is interrupted so as to shut off the gas supply in the liquid gas system.

**18.** The method according to any one of claims 16 or 17,
**characterized in that**
the admissible maximum gas flow $F_{max}$ is adapted to a respective given configuration of the liquid gas system to consumption situations to be expected, while the liquid gas system (11) is in operation.

**Revendications**

**1.** Dispositif de coupure de sécurité (27) pour une installation de gaz liquide (11) comportant un ou plusieurs consommateurs de gaz (16 à 18) pour véhicules et/ou remorques de véhicule pour éviter un dégagement involontaire de gaz, comprenant

a) une vanne de gaz électromagnétique (12) pour couper l'arrivée de gaz,
b) un capteur de débit (14) pour déterminer un flux de gaz actuel $F_a$ qui s'écoule d'un réservoir de stockage de gaz (19, 20),
c) une unité d'évaluation (15) pour comparer le flux de gaz actuel avec un flux de gaz maximal admissible $F_{max}$,
d) une unité électronique (13) pour piloter la vanne de gaz électromagnétique (12), laquelle pilote la vanne de gaz électromagnétique (12) pour couper l'arrivée de gaz lorsque l'unité d'évaluation a déterminé un flux de gaz actuel $F_a$ qui est supérieur au flux de gaz maximal admissible $F_{max}$,

sachant que le flux de gaz maximal admissible $F_{max}$ est défini de manière respectivement actuelle à l'aide d'informations de consommation actuelles des consommateurs de gaz (16 à 18), sachant que les informations de consommation sont reçues depuis l'unité électronique.

**2.** Dispositif de coupure de sécurité selon la revendication 1,

**caractérisé en ce que**
le flux de gaz maximal admissible $F_{max}$ est calculé sur la base de la somme de toutes les valeurs de consommation $F_s$ des consommateurs de gaz (16 à 18) de l'installation de gaz liquide (11).

3. Dispositif de coupure de sécurité selon la revendication 2,
**caractérisé en ce que**
le flux de gaz maximal admissible $F_{max}$ est supérieur à raison d'une valeur de tolérance de moins de 25 %, de préférence de moins de 15 %, à la somme de toutes les valeurs de consommation $F_s$ des consommateurs de gaz (16 à 18) de l'installation de gaz liquide (11).

4. Dispositif de coupure de sécurité selon la revendication 1,
**caractérisé en ce que**
les consommateurs de gaz (16 à 18) transmettent des informations sur le fait qu'ils sont sous tension ou hors tension, et/ou sur la consommation de gaz prévisible, à l'unité électronique (13) et/ou l'unité d'évaluation (15), par exemple via un système de bus.

5. Dispositif de coupure de sécurité selon l'une des revendications 1 à 4,
**caractérisé en ce que**
l'unité d'évaluation (15) est en liaison effective avec une unité d'émission d'informations (21) pour émettre une ou plusieurs des informations suivantes :

- flux de gaz actuel
- flux de gaz intégré sur une période, en particulier flux de gaz intégré depuis un changement de bouteille
- quantité résiduelle actuellement disponible dans une bouteille de gaz ou un réservoir de stockage de gaz
- avertissement en cas de franchissement vers le bas d'une quantité résiduelle prédéterminée.

6. Dispositif de coupure de sécurité selon l'une des revendications 1 à 5,
**caractérisé en ce que**
un capteur d'accident (22, 23) est en outre prévu pour déterminer un accident du véhicule et/ou de la remorque de véhicule, lequel est en liaison effective avec l'unité d'évaluation (15) et/ou l'unité électronique (13), sachant que l'unité électronique (13) pilote la vanne de gaz électromagnétique (12) pour couper l'arrivée de gaz en cas de signalisation d'un accident depuis le capteur d'accident (22, 23).

7. Dispositif de coupure de sécurité selon l'une des revendications 1 à 6,
**caractérisé en ce que**
la vanne de gaz électromagnétique (12) coupe l'arrivée de gaz dans l'installation de gaz liquide (11) en l'absence d'alimentation en énergie électrique.

8. Dispositif de coupure de sécurité selon l'une des revendications 1 à 7,
**caractérisé en ce que**
la vanne de gaz électromagnétique (12) est placée en aval d'un régulateur de pression (24) en termes d'écoulement de gaz et en particulier directement sur le régulateur de pression (24).

9. Dispositif de coupure de sécurité selon la revendication 8,
**caractérisé en ce que**
le régulateur de pression (24) est placé ou apte à être placé directement sur un réservoir de stockage de gaz (19, 20).

10. Dispositif de coupure de sécurité selon l'une des revendications 1 à 7,
**caractérisé en ce que**
la vanne de gaz électromagnétique (12) est placée en amont d'un régulateur de gaz (24) en termes d'écoulement de gaz et en particulier placée ou apte à être placée directement sur un réservoir de stockage de gaz (19, 20) ou placée directement sur le régulateur de pression (24).

11. Dispositif de coupure de sécurité selon l'une des revendications 6, ainsi que 7 à 10 dans la mesure où elles se rapportent à la revendication 6,
**caractérisé en ce que**
le capteur d'accident est un capteur d'accélération (22) et/ou un capteur d'inclinaison (23).

**12.** Dispositif de coupure de sécurité selon l'une des revendications précédentes,
**caractérisé en ce que**
un interrupteur (25) qui est disposé de préférence à l'intérieur du véhicule ou de la remorque de véhicule est prévu pour couper manuellement l'alimentation en gaz.

**13.** Dispositif de coupure de sécurité selon l'une des revendications précédentes,
**caractérisé en ce que**
un ou plusieurs capteurs supplémentaires sont en outre prévus, en particulier des capteurs de gaz et/ou détecteurs de fumée qui détectent des situations de danger supplémentaires, en particulier un échappement de gaz et/ou un incendie dans un véhicule et/ou une remorque de véhicule, sachant que les capteurs sont reliés à l'unité électronique (13) pour transmettre une signalisation de danger.

**14.** Dispositif de coupure de sécurité selon l'une des revendications précédentes,
**caractérisé en ce que**
l'unité électronique (13) et/ou les capteurs (22, 23) sont conçus de telle manière que la vanne de gaz électromagnétique (12) coupe automatiquement l'arrivée de gaz en cas de défaut.

**15.** Installation de gaz liquide (11) pour véhicules et/ou remorques de véhicule,

a) dans laquelle un ou plusieurs réservoirs de stockage de gaz (19, 20) sont reliés ou aptes à être reliés à un ou plusieurs consommateurs de gaz (16 - 18) via une ou plusieurs conduites de gaz (26),
b) comportant un dispositif de coupure de sécurité (27) selon l'une des revendications précédentes pour éviter un dégagement involontaire de gaz.

**16.** Procédé de coupure de sécurité d'une installation de gaz liquide (11) selon la revendication 15 pour véhicules et/ou remorques de véhicule, pour éviter un dégagement involontaire de gaz en cas d'accident du véhicule et/ou de la remorque de véhicule, sachant que

a) un flux de gaz actuel $F_a$ qui s'écoule d'une source de gaz est déterminé,
b) le flux de gaz actuel $F_a$ est comparé à un flux de gaz maximal admissible $F_{max}$, sachant que le flux de gaz maximal admissible $F_{max}$ est défini de manière respectivement actuelle à l'aide d'informations de consommation actuelles des consommateurs de gaz (16 à 18), sachant que les informations de consommation sont reçues depuis l'unité électronique, et
c) lorsque le flux de gaz actuel est supérieur au flux de gaz maximal admissible $F_{max}$, l'arrivée de gaz est interrompue via une vanne de gaz (12) pilotable électromagnétiquement.

**17.** Procédé selon la revendication 16,
**caractérisé en ce que**
pour couper l'arrivée de gaz dans l'installation de gaz liquide, l'arrivée de courant à la vanne de gaz électromagnétique est interrompue.

**18.** Procédé selon l'une des revendications 16 ou 17,
**caractérisé en ce que**
le flux de gaz maximal admissible $F_{max}$ pour une configuration respectivement donnée de l'installation de gaz liquide (11) est adapté à des situations de consommation prévisibles au cours du fonctionnement de l'installation de gaz liquide (11).

FIG 1

FIG 2

**IN DER BESCHREIBUNG AUFGEFÜHRTE DOKUMENTE**

**In der Beschreibung aufgeführte Patentdokumente**

- DE 102005040024 A1
- EP 0328031 A2